# FASCICULE DE BREVET EUROPEEN

(11) **EP 1 098 779 B1**
(45) Date de publication et mention de la délivrance du brevet: **24.04.2002**
(21) Numéro de dépôt: 99932741.4
(22) Date de dépôt: 28.06.1999
(51) Int. Cl.: B60B 21/10, B60B 21/02

(54) **ROUE AVEC JANTE AYANT DES SIEGES INCLINES VERS L'EXTERIEUR**
FELGENRAD MIT NACH AUSSEN GENEIGTEN SCHULTERN
WHEEL WITH RIM HAVING SEATS SLOPING OUTWARDS

(30) Priorité: 20.07.1998 FR 9809387
(43) Date de publication de la demande: 16.05.2001
(73) Titulaire: Michelin Recherche et Technique S.A., 1763 Granges-Paccot (CH); Sociéte de Technologie Michelin, 63000 Clermont-Ferrand Cedex 09 (FR)
(72) Inventeur: PAUC, Gilbert, F-63118 Cebazat (FR); EMBERGER, Thomas, F-63000 Clermont-Ferrand (FR)
(74) Mandataire: Dequire, Philippe Jean-Marie Denis
(86) Numéro de dépôt international: EP9904463
(87) Numéro de publication internationale: WO0005083

(56) Documents cités:
- EP-A- 0 138 027
- EP-A- 0 796 747
- EP-A- 0 807 539
- DE-A- 19 721 860
- GB-A- 2 121 738

## Description

L'invention a pour objet une roue, composée d'un disque et d'une jante, pour pneumatique, et susceptible de former éventuellement, avec un anneau de soutien de la bande de roulement du pneumatique et le pneumatique, un ensemble roulant pouvant être utile dans le cas de roulage où la pression de gonflage s'abaisse anormalement par rapport à la pression normale d'emploi, dite pression nominale de service, pression pouvant même devenir nulle.

Les principales difficultés rencontrées dans le cas d'un roulage à plat ou à pression faible concernent les risques de décoincement des bourrelets du pneumatique et en particulier le décoincement du bourrelet situé du côté extérieur du pneumatique monté du côté extérieur du véhicule lors d'un roulage en virage.

La demande européenne EP-A-0 807 539 décrit, à titre d'exemple, une roue selon le préambule de la revendication 1, destinée à résoudre efficacement le problème ci-dessus. Cette roue comprend, vue en section méridienne, une jante avec un premier et un deuxième sièges de jante, au moins le premier siège de jante ayant une génératrice dont l'extrémité axialement extérieure est sur un cercle de diamètre inférieur au diamètre du cercle sur lequel se trouve l'extrémité axialement intérieure, le premier siège de jante étant prolongé axialement à l'extérieur par une saillie ou hump de faible hauteur, et axialement à l'intérieur par une portée destinée à recevoir un anneau de soutien de bande de roulement, et d'un disque de roue, réuni du côté du premier siège de jante à la paroi radialement intérieure de la jante. Cette roue est telle que la portée de jante, destinée à recevoir l'anneau de soutien, est munie d'éléments en relief séparés par des évidements ou creux.

Ces évidements ou creux dans la portée d'appui de l'anneau de soutien ont pour but de limiter le poids de la roue.

Cette limitation peut cependant se révéler insuffisante, notamment dans le cas où des impératifs de design demandent de raccorder le profil extérieur du disque directement au siège extérieur (roue dite «full face»). Cette roue présente aussi des difficultés de réalisation, en particulier, lorsque l'on veut réaliser une telle roue en tôles métalliques.

L'invention a pour objet une roue qui améliore sensiblement la roue précédente. Cette roue R est composée d'une jante avec un premier et un deuxième sièges de jante, au moins le premier siège de jante ayant une génératrice dont l'extrémité axialement extérieure est sur un cercle de diamètre inférieur au diamètre du cercle sur lequel se trouve l'extrémité axialement intérieure, ledit premier siège de jante étant prolongé axialement à l'extérieur par une saillie ou hump de faible hauteur, et axialement à l'intérieur par une portée destinée à recevoir un anneau de soutien de bande de roulement, et d'un disque de roue, réuni du côté du premier siège de jante à la paroi radialement intérieure de la jante. Cette roue R est caractérisée en ce que la portée de jante est constituée, d'une première et d'une seconde zones d'appui séparées par une gorge circonférentielle débouchant radialement extérieurement.

La demanderesse a en effet constatée que la présence de deux zones d'appui suffisent pour assurer une bonne tenue à certains types d'anneaux de soutien, sans que la présence des nervures soit indispensable.

Cette roue présente l'avantage de diminuer de façon significative le poids de la roue.

La gorge circonférentielle peut avantageusement servir de logement à un dispositif de surveillance de la pression.

Il est aussi possible de recouvrir la gorge circonférentielle, radialement extérieurement, au moins en partie, par un support en forme de virole cylindrique destiné à recevoir un anneau de soutien de bande de roulement.

Cette roue a l'avantage de présenter, deux zones d'appui réduites au minimum ce qui permet un remarquable gain de poids. Dans cette roue, la fonction d'appui de l'anneau de soutien est assurée par un support de forme générale annulaire, comportant ou non des trous et qui peut être solidaire de la roue de façon amovible ou non, ou encore solidaire de l'anneau de soutien. Cette roue permet notamment de dessiner des roues full-face de poids acceptable.

La roue selon l'invention peut avoir une jante réalisée à partir d'une tôle métallique, d'acier ou d'alliage d'aluminium. Le disque peut aussi être réalisé à partir d'une telle tôle métallique. La liaison entre le disque et la jante est alors avantageusement réalisée par emboîtage sous la gorge circonférentielle.

L'invention sera mieux comprise à l'aide du dessin annexé, illustrant des exemples non limitatifs d'exécution d'une roue destinée au montage d'un pneumatique 185/610 R 400, dessin sur lequel :
- la figure 1 est une vue méridienne et schématique d'une roue monobloc telle que décrite dans la demande européenne précitée ;
- la figure 2 est une vue de dessus de la jante de la figure 1 ;
- la figure 3(a) est une vue méridienne et schématique d'une roue monobloc conforme à l'invention et la figure 3(b) est une variante de cette roue ;
- la figure 4 est une vue, en coupe méridienne, d'un anneau de soutien en matériau thermoplastique ;
- la figure 5 est une vue, en coupe méridienne, d'un anneau de soutien en caoutchouc ;
- la figure 6 est une vue similaire à la figure 2 d'une variante de roue monobloc conforme à l'invention, full face ;
- la figure 7 est une vue similaire à la figure 2 d'une roue en tôle métallique conforme à l'invention ;
- la figure 8 présente une roue identique à celle de la figure 7 équipée d'un dispositif de surveillance de la pression.

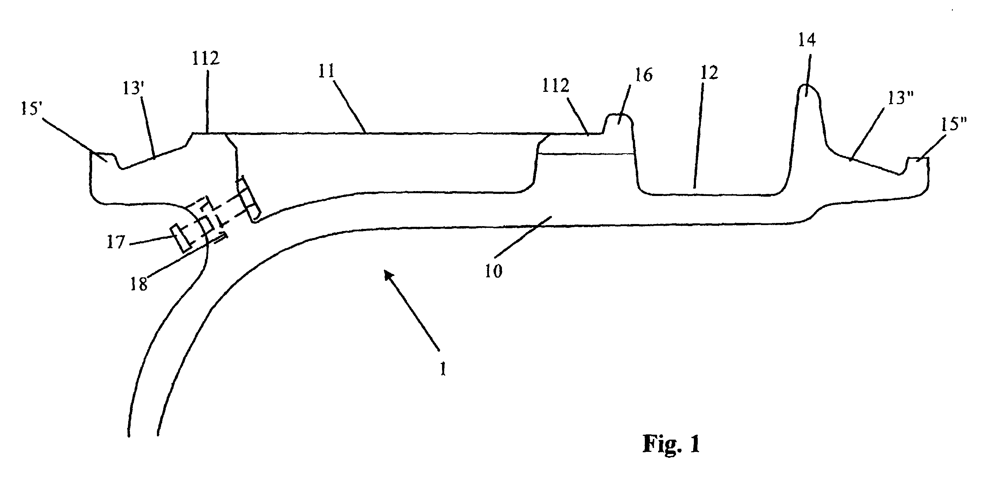

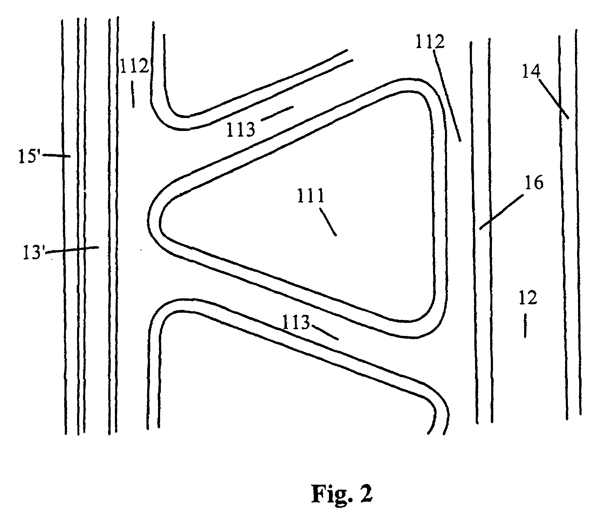

La figure 1 présente, en vue méridienne et schématique, une roue 1 monobloc telle que divulguée par la demande de brevet EP 0 807 539. Cette roue comprend une jante 10 avec deux sièges de jante 13' et 13" de diamètres égaux et dont les génératrices sont inclinées vers l'extérieur. Les deux sièges sont prolongés extérieurement par des saillies ou humps 15' et 15". Le siège extérieur 13' est prolongé axialement vers l'intérieur par une portée 11, elle-même munie à son autre extrémité d'une butée de positionnement 16 d'un anneau de soutien destiné à être monté sur cette portée 11. Le siège intérieur 13" est prolongé axialement à l'intérieur par un rebord de jante 14, rebord délimitant avec la butée de positionnement 16 une gorge de montage 12. Comme l'illustre la figure 2, la portée 11 est munie d'évidements 111 de forme triangulaire. Ces évidements 111 sont délimités axialement par les nervures transversales 113 de la portée et circonférentiellement par des nervures circonférentielles 112.

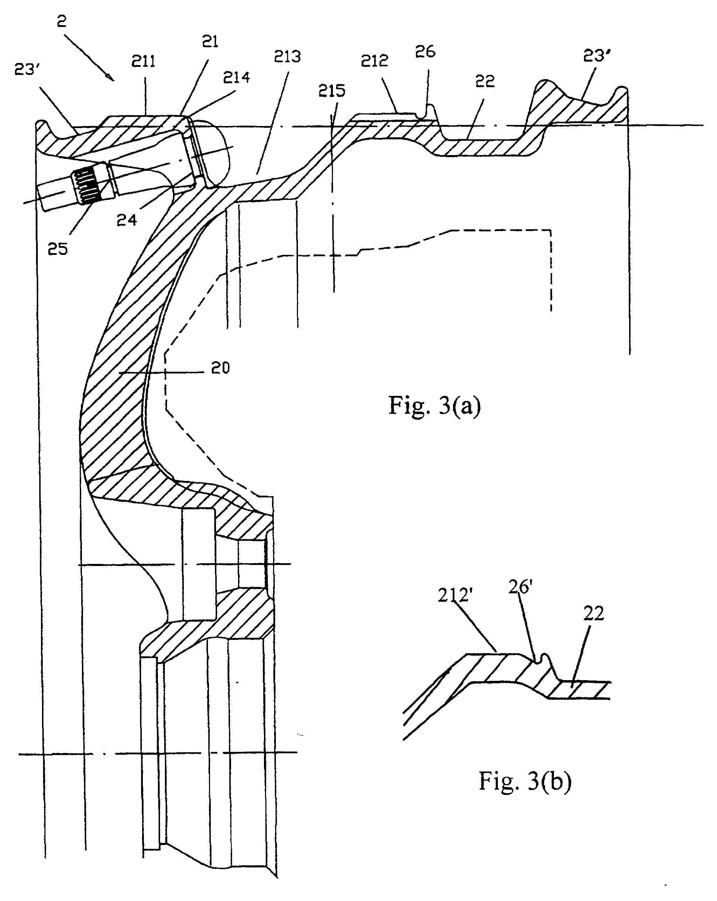

La roue 2, montrée sur la figure 3(a), reprend en grande partie les caractéristiques de la roue 1 présentée à la figure 1. Elle en diffère cependant par le fait que les diamètres des deux sièges 23' et 23" sont inégaux, le premier siège 23', disposé du côté extérieur de la roue 2, ayant un diamètre inférieur à celui du second siège 23". Cela permet de diminuer la profondeur de la gorge de montage 22.

Conformément à l'invention, la portée 21 de cette roue 2 est constituée par une première 211 et une seconde 212 zones d'appui séparées par une gorge circonférentielle 213 débouchant radialement extérieurement.

Cette gorge circonférentielle permet de diminuer substantiellement le poids de la roue 2 relativement à la roue 1 et facilite fortement sa réalisation.

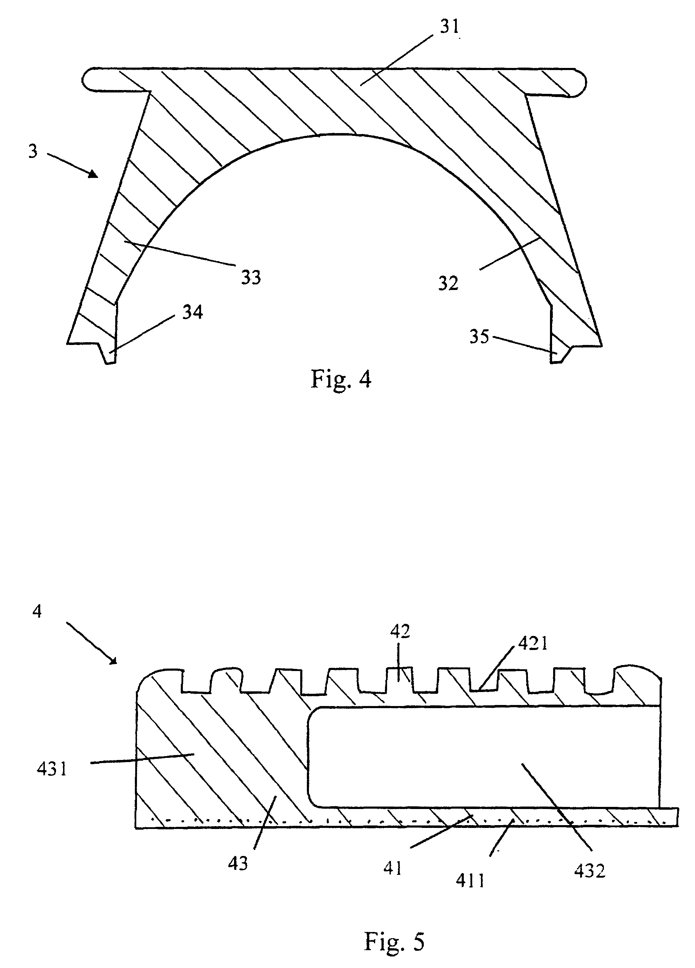

La portée 212 comprend une saillie 26 radialement extérieure servant de butée axiale pour un appui. Cette saillie peut aussi être radialement intérieure 26' comme illustré à la figure 3(b). Dans ce cas la surface intérieure de l'appui comporte une nervure de forme adaptée pour venir se bloquer à l'intérieur lors de son montage sur la roue 2. Un tel appui est réalisé de préférence en caoutchouc (voir figure 5).

La roue 2 comporte aussi un trou de valve 24 disposé dans le flanc extérieur 214 de la gorge circonférentielle 213. Ce trou de valve débouche à l'extérieur du disque 20.

Les deux zones d'appui 211 et 212 sont adaptées pour supporter un anneau de soutien tel que celui présenté, en coupe méridienne, à la figure 4. Cet anneau de soutien 3, comprend un sommet annulaire 31 destiné à venir en contact avec la bande de roulement du pneumatique en cas de diminution sévère de la pression de gonflage du pneumatique. Deux pieds 32 et 33 s'étendent radialement intérieurement à partir du sommet. Ces pieds ont leur extrémité adaptée pour venir en appui, lorsque l'anneau de soutien est monté sur la roue 2, contre les deux zones d'appui 211 et 212. Des ergots 34, 35 venant en appui contre les flancs intérieurs 214 et 215 des zones d'appui 211 et 212, empêchent tout glissement axial vers l'extérieur de la gorge circonférentielle 213 des pieds 32 et 33. Ces pieds sont régulièrement répartis sur la circonférence de l'anneau de soutien. L'anneau de soutien 3 peut notamment être réalisé en matériau thermoplastique renforcé. La forme de l'anneau de soutien permet son ovalisation lors de son montage dans un pneumatique, préalable au montage de l'ensemble pneumatique et anneau de soutien autour de la roue 3.

On peut aussi utiliser des anneaux de soutien essentiellement constitués de caoutchouc, comme décrits, par exemple, dans la demande EP 0 796 747 et présentés à la figure 5. Un tel anneau de soutien 4 comporte une base 41, de forme généralement annulaire et renforcée par une nappe 411 orientée longitudinalement, un sommet 42, sensiblement annulaire, avec sur sa paroi radialement extérieure des rainures longitudinales 421 et un corps annulaire 43 de liaison entre la base et le sommet. Le corps annulaire 43 de liaison comporte une première partie massive 431 ainsi qu'une seconde partie 432 comportant des évidements s'étendant axialement sur sensiblement plus de la moitié du corps 43 et débouchant du côté extérieur de l'appui. Ces évidements sont régulièrement répartis sur la circonférence du corps 43 et définissent des parois radiales.

Pour de tels anneaux de soutien, les deux zones d'appui peuvent avoir une surface insuffisante et cela limite l'efficacité d'un roulage en appui.

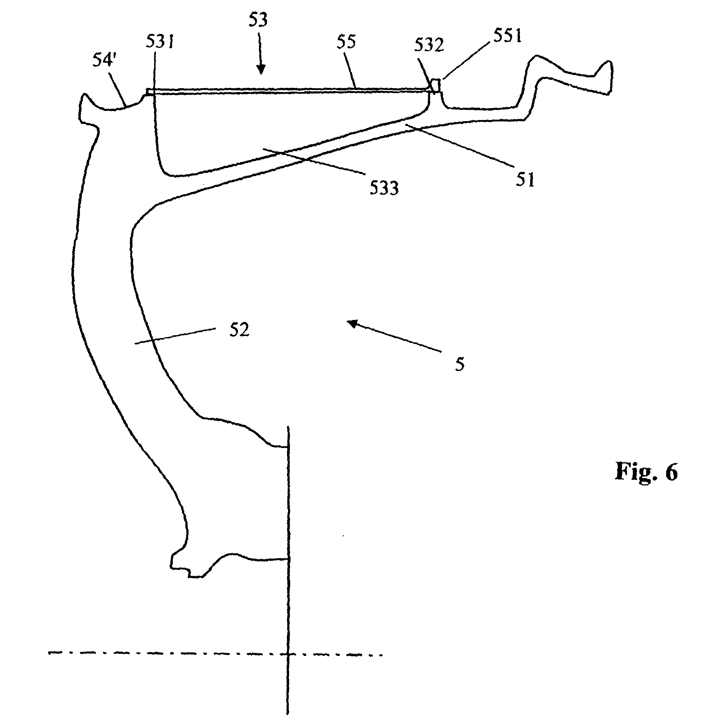

Dans ce cas, la figure 6 présente une roue 5 monobloc, dans laquelle la portée 53 comprend deux zones d'appui 531 et 532 séparées par une gorge circonférentielle 533. Les deux zones d'appui servent d'appui à un support 55 d'un anneau de soutien similaire à celui de la figure 5. Le support 55 est annulaire et est une virole métallique avec une saillie 551, radialement extérieure et disposée à son extrémité axialement intérieure, destinée à bloquer le déplacement axial de l'anneau de soutien.

Le support 55 est fixé rigidement à la portée 53, par exemple par soudage, sertissage ou collage. Il peut aussi être fixé de façon amovible ou faire partie de l'anneau de soutien.

Ce mode de réalisation d'une roue selon l'invention permet d'augmenter très sensiblement la largeur axiale de la gorge circonférentielle 533 et donc de réduire fortement le poids total de la roue. Cela est particulièrement important lorsque l'on conçoit des roues, comme celle de la figure 6, dont le disque 52 est réuni à la jante 51 directement sous le siège extérieur 54' (roue full-face).

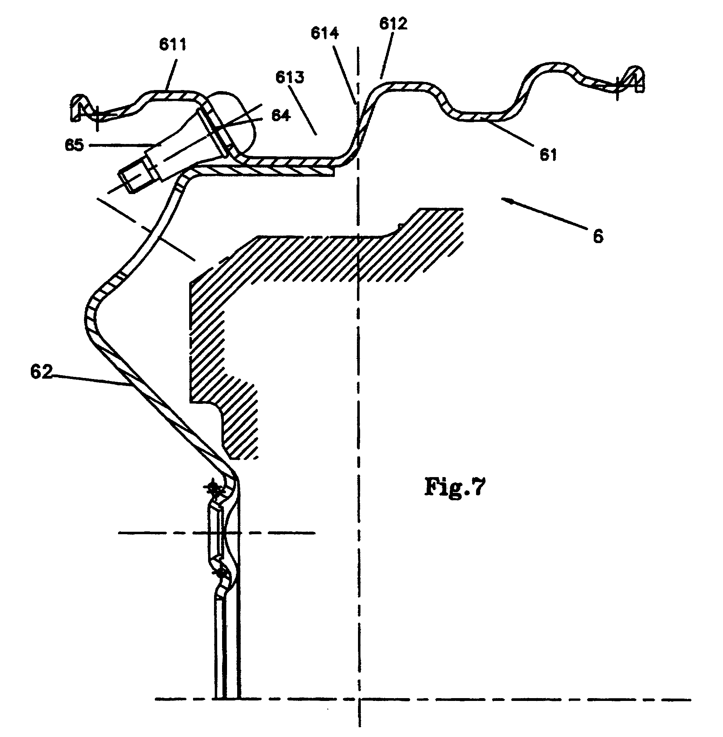

La figure 7 présente une roue 6, similaire à la roue monobloc 2 de la figure 3, mais obtenue par assemblage d'une jante 61 et d'un disque 62 faits à partir de tôles d'acier. L'assemblage est réalisé par emboîtage du disque 62 sous la gorge circonférentielle 613. Comme précédemment, la valve 65 traverse le flanc extérieur de la gorge 613 par le trou 64 et débouche à l'extérieur du disque 62. La roue 6 peut aussi être réalisée en tôle d'aluminium.

La principale différence, en dehors du mode de réalisation de la roue, est le fait que le diamètre de la zone d'appui 612 est supérieur à celui de la zone d'appui 611. En conséquence, un anneau de soutien tel que présenté à la figure 5 et convenablement rigidifié pour fonctionner efficacement en appui sur les deux zones 611 et 612, vient se bloquer contre le flanc intérieur 614 de la gorge 613 et la zone 612. La base 41 de l'appui 4 a de préférence sa géométrie extérieure adaptée pour venir s'appuyer contre le flanc 614 et la zone d'appui 612.

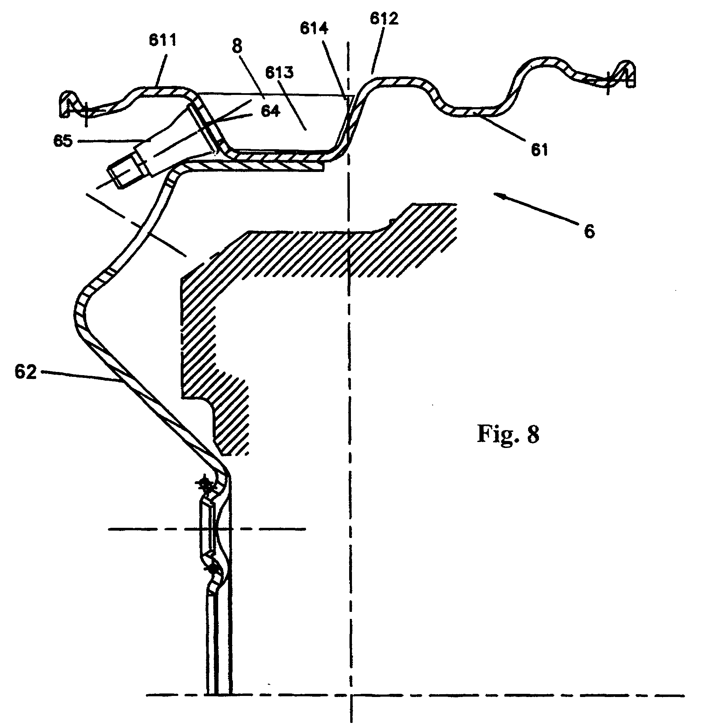

La gorge circonférentielle des roues selon l'invention peut avantageusement servir de logement à un dispositif de surveillance de la pression des pneumatiques. Ce dispositif 8 peut notamment être fixé à la valve 65 comme illustré à la figure 8.

## Revendications

1. Roue (2, 5, 6) composée d'une jante (51, 61) avec un premier (23', 54') et un deuxième (23") sièges de jante, au moins le premier siège (23', 54') de jante ayant une génératrice dont l'extrémité axialement extérieure est sur un cercle de diamètre inférieur au diamètre du cercle sur lequel se trouve l'extrémité axialement intérieure, ledit premier siège (23', 54') de jante étant prolongé axialement à l'extérieur par une saillie ou hump (15') de faible hauteur, et axialement à l'intérieur par une portée (21, 53) destinée à recevoir un anneau de soutien de bande de roulement (3, 4), et d'un disque (52, 62) de roue, réuni du côté du premier siège (23', 54') de jante à la paroi radialement intérieure de la jante, **caractérisée en ce que** la portée (21, 53) de jante est constituée d'une première (211, 511, 611) et d'une seconde (212, 512, 612) zones d'appui séparées par une gorge circonférentielle (213, 513, 613) débouchant radialement extérieurement.

2. Roue selon la revendication 1, dans laquelle le flanc extérieur (214, 615) de la gorge circonférentielle (213, 613) comporte un trou (24, 64) débouchant à l'extérieur du disque (20, 62) destiné à recevoir une valve de gonflage (25, 65).

3. Roue selon l'une des revendications 1 ou 2, dans laquelle la gorge circonférentielle (213, 513, 613) sert de logement pour un dispositif de surveillance de la pression des pneumatiques (8).

4. Roue selon l'une des revendications 1 à 3, dans laquelle la seconde zone d'appui (212) disposée du côté du second siège (23") de jante relativement à la gorge (213), comporte une saillie (26) radialement extérieure destinée à bloquer le déplacement axial de l'anneau de soutien (3, 4).

5. Roue selon l'une des revendications 1 à 4, dans laquelle la seconde zone d'appui (212') disposée du côté du second siège (23") de jante relativement à la gorge (213), comporte une saillie (26') radialement intérieure destinée à bloquer le déplacement axial de l'anneau de soutien (3, 4).

6. Roue selon l'une des revendications 1 à 3, dans laquelle la seconde zone d'appui (612), disposée du côté du second siège (23") de jante relativement à la gorge (613), a un diamètre strictement supérieur à celui de la première zone d'appui (611), le flanc (614) raccordant la gorge circonférentielle (613) et ladite seconde zone d'appui (612) servant à supporter l'anneau de soutien et à bloquer axialement ledit anneau de soutien.

7. Roue selon l'une des revendications 1 à 6, dans laquelle ladite portée (53) est recouverte, radialement extérieurement, au moins en partie, par un support (55) en forme de virole cylindrique destiné à recevoir un anneau de soutien de bande de roulement (3, 4).

8. Roue selon la revendication 7, dans laquelle ledit support (55) comporte des trous disposés circonférentiellement.

9. Roue selon l'une des revendications 7 ou 8, dans laquelle ladite virole (55) est rigidement liée à la jante notamment par soudage, sertissage ou collage.

10. Roue selon l'une des revendications 7 ou 8, dans laquelle ladite virole (55) est fixée de façon amovible à la jante.

11. Roue selon la revendication 7, dans laquelle ladite virole (55) est solidaire de l'anneau de soutien de bande de roulement.

12. Roue selon l'une des revendications 1 à 11, dans laquelle la jante (61) est réalisée à partir d'une tôle métallique.

13. Roue selon la revendication 12, dans laquelle la jante (61) et le disque (62) sont chacun réalisés à partir d'une tôle métallique et dans laquelle l'assemblage entre le disque (62) et la jante (61) est effectué par emboîtage sous la gorge circonférentielle (613).

## Claims

1. A wheel (2, 5, 6) composed of a rim (51, 61) with first (23', 54') and second (23") rim seats, at least the first rim seat (23', 54') having a generatrix, the axially outer end of which is on a circle of diameter less than the diameter of the circle on which the axially inner end is located, said first rim seat (23', 54') being extended axially outward by a protrusion or hump (15') of low height and axially inward by a bearing surface (21, 53) intended to receive a tread support ring (3, 4), and of a wheel disc (52, 62), joined on the side of the first rim seat (23', 54') to the radially inner wall of the rim, **characterised in that** the rim bearing surface (21, 53) consists of first (211, 511, 611) and second (212, 512, 612) support zones separated by a circumferential groove (213, 513, 613) opening radially outward.

2. A wheel according to Claim 1, in which the outer side (214, 615) of the circumferential groove (213, 613) comprises a hole (24, 64) emerging outside the disc (20, 62) intended to receive an inflation valve (25, 65).

3. A wheel according to one of Claims 1 or 2, in which the circumferential groove (213, 513, 613) serves as a housing for a tyre pressure monitoring device (8).

4. A wheel according to one of Claims 1 to 3, in which the second support zone (212), arranged on the side of the second rim seat (23") relative to the groove (213), comprises a radially outer protrusion (26) intended to block the axial displacement of the support ring (3, 4).

5. A wheel according to one of Claims 1 to 4, in which the second support zone (212'), arranged on the side of the second rim seat (23") relative to the groove (213), comprises a radially inner protrusion (26') intended to block the axial displacement of the support ring (3, 4).

6. A wheel according to one of Claims 1 to 3, in which the second support zone (612), arranged on the side of the second rim seat (23") relative to the groove (613), has a diameter strictly greater than that of the first support zone (611), the side (614) connecting the circumferential groove (613) and said second support zone (612) serving to support the support ring and to prevent said support ring from moving axially.

7. A wheel according to one of Claims 1 to 6, in which said bearing surface (53) is covered, radially outside, at least in part, by a cylindrical hoop-shaped support (55) intended to receive a tread support ring (3, 4).

8. A wheel according to Claim 7, in which said support (55) has circumferentially arranged holes.

9. A wheel according to one of Claims 7 or 8, in which said hoop (55) is rigidly joined to the rim, in particular by welding, crimping or gluing.

10. A wheel according to one of Claims 7 or 8, in which said hoop (55) is removably mounted on the rim.

11. A wheel according to Claim 7, in which said hoop (55) is an integral part of the tread support ring.

12. A wheel according to one of Claims 1 to 11, in which the rim (61) is made of sheet metal.

13. A wheel according to Claim 12, in which the rim (61) and the disc (62) are each made of sheet metal and in which the assembly of the disc (62) and the rim (61) is carried out by insertion under the circumferential groove (613).

## Patentansprüche

1. Rad (2, 5, 6), das zusammengesetzt ist aus einer Felge (51, 61) mit einem ersten (23', 54') und einem zweiten (23") Felgensitz, wobei mindestens der erste Felgensitz (23', 54') eine Erzeugende hat, deren axial äußeres Ende auf einem Kreis mit einem kleineren Durchmesser als der Durchmesser des Kreises liegt, auf dem sich das axial innere Ende befindet, und wobei der genannte erste Felgensitz (23', 54') axial auf der Außenseite durch einen Vorsprung oder Höcker ("hump") (15') geringer Höhe und axial auf der Innenseite durch einen Bereich (21, 53) verlängert ist, der der dazu bestimmt ist, einen Ring zur Unterstützung der Lauffläche (3, 4) aufzunehmen, sowie aus einer Radscheibe (52, 62), die auf der Seite des ersten Felgensitzes (23', 54') mit der radial inneren Wand der Felge vereint ist, **dadurch gekennzeichnet, daß** der Bereich (21, 53) der Felge von einer ersten (211, 511, 611) und einer zweiten (212, 512, 612) Auflagezone gebildet ist, die durch eine Umfangsnut (213, 513, 613) getrennt sind, die radial außen mündet.

2. Rad nach Anspruch 1, worin die Außenseite (214, 615) der Umfangsnut (213, 613) ein Loch (24, 64) aufweist, das auf der Außenseite der Scheibe (20, 62) mündet, die bzw. das zur Aufnahme eines Aufpumpventils (25, 65) bestimmt ist.

3. Rad nach einem der Ansprüche 1 oder 2, worin die Umfangsnut (213, 513, 613) zur Unterbringung für eine Vorrichtung zur Überwachung des Drucks der Reifen (8) dient.

4. Rad nach einem der Ansprüche 1 bis 3, worin die zweite Auflagezone (212), die auf der Seite des zweiten Felgensitzes (23") angeordnet ist, bezogen auf die Nut (213), einen radial äußeren Vorsprung (26) aufweist, der dazu bestimmt ist, die axiale Verlagerung des Unterstützungsringes (3, 4) zu blockieren.

5. Rad nach einem der Ansprüche 1 bis 4, worin die zweite Auflagezone (212'), die auf der Seite des zweiten Felgensitzes (23") angeordnet ist, bezogen auf die Nut (213), einen radial inneren Vorsprung (26') aufweist, der dazu bestimmt ist, die axiale Verlagerung des Unterstützungsringes (3, 4) zu blockieren.

6. Rad nach einem der Ansprüche 1 bis 3, worin die zweite Auflagezone (612), die auf der Seite des zweiten Felgensitzes (23") angeordnet ist, bezogen auf die Nut (613), einen streng größeren Durchmesser als den der ersten Auflagezone (611) aufweist, wobei die Seite (614), die die Umfangsnut (613) und die genannte zweite Auflagezone (612) verbindet, dazu dient, den Unterstützungsring zu tragen und axial den genannten Unterstützungsring zu blockieren.

7. Rad nach einem der Ansprüche 1 bis 6, worin der genannte Bereich (53) radial außen zum mindesten teilweise durch einen Träger (55) in Form eines Zylinderringes abgedeckt ist, der dazu bestimmt ist, einen Unterstützungsring für die Lauffläche (3, 4) aufzunehmen.

8. Rad nach Anspruch 7, worin der genannte Träger (55) Löcher aufweist, die in Umfangsrichtung angeordnet sind.

9. Rad nach einem der Ansprüche 7 oder 8, worin der genannte Ring (55) bevorzugt durch Schweißen, Klemmen oder Kleben starr mit der Felge verbunden ist.

10. Rad nach einem der Ansprüche 7 oder 8, worin der genannte Ring (55) abnehmbar auf der Felge befestigt ist.

11. Rad nach Anspruch 7, worin der genannte Ring (55) fest bzw. einstückig mit dem Unterstützungsring der Lauffläche verbunden ist.

12. Rad nach einem der Ansprüche 1 bis 11, worin die Felge (61) aus einem Metallblech hergestellt ist.

13. Rad nach Anspruch 12, worin die Felge (61) und die Scheibe (62) jeweils aus einem Metallblech dergestellt sind, und worin der Zusammenbau zwischen der Scheibe (62) und der Felge (61) durch Einschachtelung unter der Umfangsnut (613) ausgeführt ist.
